# EUROPEAN PATENT SPECIFICATION

(11) **EP 1 423 234 B1**
(45) Date of publication and mention of the grant of the patent: **20.01.2010**
(21) Application number: 02754066.5
(22) Date of filing: 26.08.2002
(51) Int. Cl.: B24B 13/005, B29D 11/00

(54) **METHOD AND APPARATUS FOR OPHTHALMIC LENS BLOCKING**
VERFAHREN UND VORRICHTUNG ZUM BLOCKEN VON BRILLENLINSEN
PROCEDE ET APPAREIL POUR BLOCAGE DE LENTILLE OPHTALMIQUE

(30) Priority: 31.08.2001 CA 2356579
(43) Date of publication of application: 02.06.2004
(73) Proprietor: Satisloh GmbH, 35578 Wetzlar (DE)
(72) Inventor: SAVOIE, Marc, 35578 Wetzlar (DE); CULF, Adrian, Moncton, New Brunswick E1G 1Y5 (CA)
(74) Representative: Oppermann, Mark
(86) International application number: PCT/CA2002/001302
(87) International publication number: WO 2003/018254

(56) References cited:
- US-A- 4 380 613
- US-A- 4 502 909
- US-A- 5 380 387
- US-A- 5 648 025
- US-A- 5 777 024
- US-A- 6 012 965

## Description

### FIELD OF THE INVENTION

The present invention relates to the bonding of an ophthalmic lens blank to a lens support block ("lens block") for supporting the lens blank during a lens generating process. More particularly the present invention relates to the use of an adhesive which is curable by light in the ultraviolet ("UV") and high visible spectrum as a bonding agent.

### BACKGROUND OF THE INVENTION

An ophthalmic lens blank generally has a first face with a predetermined curvature and a second face, opposite the first face on which a desired surface contour is generated by a machining process. The overall process is generally referred to as "lens generation" and the overall object is to yield a finished lens wherein the first and second face curvatures cooperate to yield desired optical properties.

Lens surfacing is carried out using profiling machines which typically have a cutter of some type which is moved across the second face. The lens blank may be stationary or rotating during the cutting operation, depending on the particular profiling machine which is being used.

In order to support the lens blank during profiling, it is bonded to a lens support. The support is grasped by chuck or other suitable coupling means during lens generation to provide secure mounting to the profiling machine while avoiding damage to the lens.

In order to produce a finished lens of the highest possible quality, the position and orientation of the second face relative to the first face must be accurate. As the lens is generally held by the first face during machining, accurate knowledge as to the first face geometry as well as its orientation and position is crucial to the surfacing of the second face if the second face is to be accurately disposed relative to the first face.

U.S. Patent No. 5,919,080 teaches an apparatus which maps the front face surface, accurately mounts the lens to a lens block and references the contour of the mapped surface to a reference datum on the lens block thereby allowing accurate second face generation by eliminating potential errors arising from inaccurate placement and orientation of the first face during the lens generation operation.

The bonding agent taught by U.S. Patent No. 5,919,080 is wax, which is injected in a molten state through the lens block between the lens block and the lens blank. The wax is allowed to solidify and adhesively bonds the lens blank to lens block.

It has been found that the use of molten wax as a bonding agent carries certain disadvantages. The wax can cause contamination of the lens, the heat associated with the wax may cause distortion problems with the lens, the wax itself tends to be rather messy and the time required for setting is quite significant, on the order of 15 minutes, before the lens can be safely released to subsequent processing operations.

Other bonding agents, such as curable adhesives have been proposed for bonding a lens to a lens block however these generally present their own disadvantages.

U.S. Patent No. 5,380,387 teaches a UV or visible light curable adhesive formulation. The formulation however has a significant amount of shrinkage requiring relatively slow curing times so as not to impart undue stresses on the lens which may cause lens deflection and subsequent optical errors. Furthermore in order to de-block the lens, a releasing agent is incorporated which requires immersion in a solvent for de-blocking. The de-blocking procedure is relatively slow with de-blocking times on the order of 30 minutes being suggested. Short de-blocking times require minimal contact with the lens block and all the examples in the patent relate to blocking onto an annular ring. An annular ring may be suitable for glass lenses due to the relatively high structural rigidity of a glass, however machining forces on a plastic lens blank (which represents approximately 90% of the market) requires support underneath the lens during machining to avoid deflection of the lens by the tool used to generate the lens surface. The use of the compounds taught by this patent would be prohibitively slow in de-blocking were a bond to be effected over the entire lens surface. Many of the formulations taught use water as the de-blocking solvent which may not be desirable where water-based lubricants are used in the surfacing operation.

U.S. Patent No. 5,624,521 teaches the application of a UV cement in dots to promote de-bonding (or de-blocking) by minimizing the surface covered by the UV cement and maximizing the exposed edges available for absorbing a de-blocking solution. Even so, de-blocking times on the order of 1-2 hours are suggested. Furthermore the use of dots does not provide the degree of support that will be provided by an even layer of UV cement between the lens and the lens block. Also a sealant around the edges of the dots is suggested to avoid de-bonding by lubricants used in the lens generation operation.

Both of the above patents teach at least initial hardening by transmitting electromagnetic radiation in the UV spectrum through the lens itself. This may be problematic in cases where a lens is to be blocked which has poor UV transmitting properties such as a UV blocking lens. U.S. Patent No. 5,007,975 however teaches a method of blocking a lens blank to a lens supporting member with a UV curable adhesive wherein the UV exposure of the adhesive may be effected from either side of the lens block or from the side of the support member. Nevertheless the UV cement taught requires a suitable alkaline or acid aqueous solution. Although UV exposure times and de-bonding times on the order of 5 seconds to 10 minutes are referred to, the examples typically use exposure times of at least 30 seconds and de-bonding times of at least 3 minutes. The patent addresses very small lenses (non-water swellable contact lenses) and the de-blocking times should be considered in that context. Furthermore, no apparatus is taught for how accurate blocking may be carried out.

All the above references teach the use of high pressure mercury lamps as the source of UV rays. Such lamps generally operate at high temperatures (800°-900°C) are filled with a toxic substance (mercury), generate a relatively narrow wavelength spectrum and are limited in intensity by the maximum continual power that can be sustained therethrough.

It is an object of the present invention to provide a lens blocking method and apparatus which enables accurate orientation and blocking of a lens blank to a lens block using a UV curable adhesive.

It is a further object of the present invention to provide such a lens blocking apparatus and method which will result in accurate orientation and placement of the lens relative to the lens block and the ability to generate and store first face contour information relative to a datum on the lens block.

It is a still further object of the present invention to provide a lens blocking adhesive curable by light in the UV visible spectrum which may be applied over the majority of a first face surface of the lens, has a viscosity which will prevent its spillage during blocking, has low irritability, is non-hazardous (thereby easing shipping and disposal requirements), is relatively inexpensive, provides adequate support to the lens to avoid optical defects associated with lens flexing during lens generation, is flexible enough to attenuate vibration to avoid de-blocking during generation, is not subject to excessive dimensional change upon curing to avoid lens warpage through shrinkage stresses and is removable without damage or residue using mechanical separation means (i.e. exhibits total adhesive failure as required), sets relatively quickly and does not deform under heat which may be associated with lens manufacture such as in curing lens coatings.

It is yet another object of the present invention to provide a method of bonding a lens to a lens block which allows for the determination of the amount of adhesive required and thereby allows for automatic dispensing of the adhesive without operator intervention.

### SUMMARY OF THE INVENTION

The invention provides a method for blocking a lens blank according to claim 1 and an apparatus according to claim 12.

The dependent claims describe further embodiments of the invention.

### DESCRIPTION OF DRAWINGS

Preferred embodiments of the present invention are described below with reference to the accompanying illustrations in which:

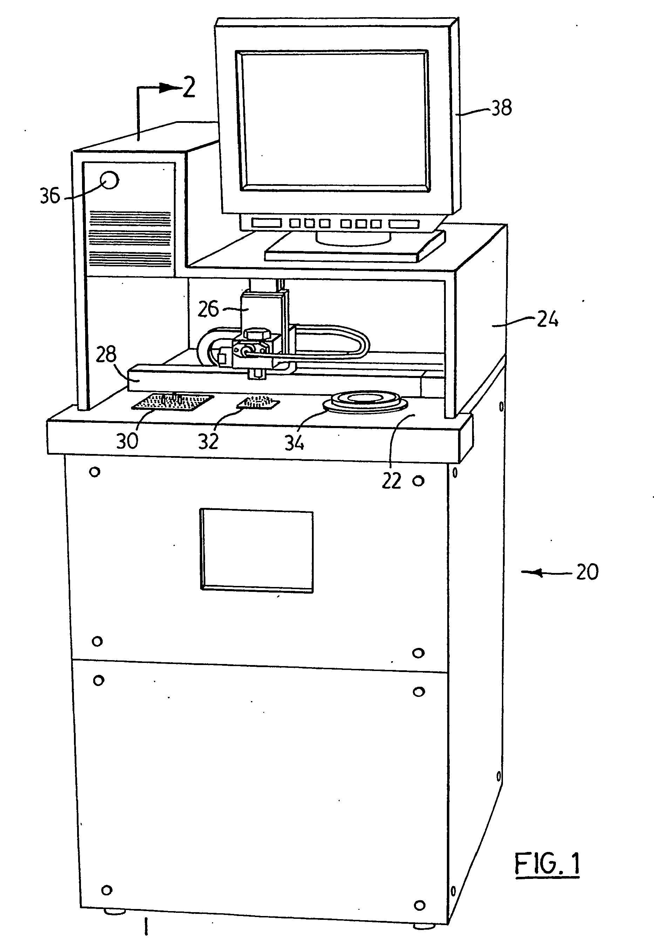

Figure 1 is a perspective view of an ophthalmic lens blocking apparatus according to the present invention;

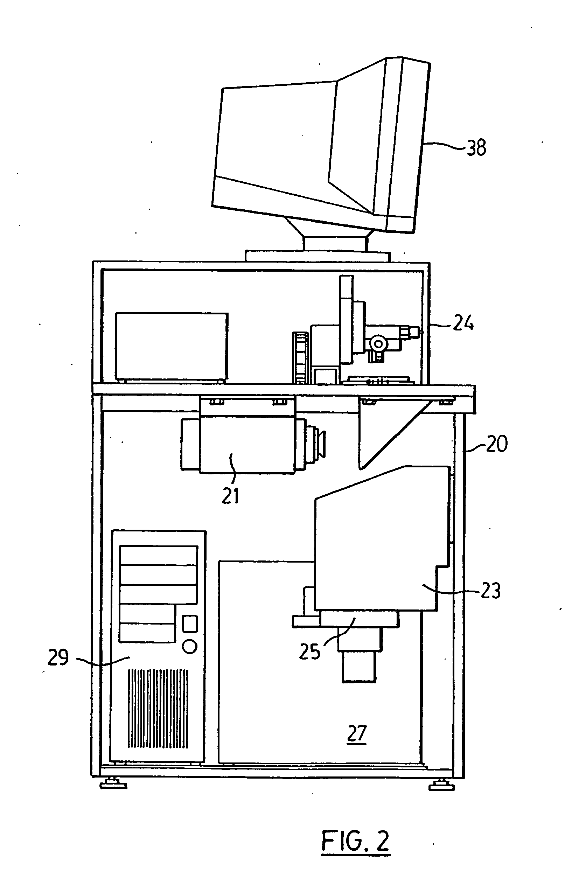

Figure 2 is a section on line 2-2 of Figure 1;
Figure 3 is an enlarged perspective view of the portion of Figure 1 illustrating a lens blank receiving station, a probing station, a blocking station and a transporter;
Figure 4 is a section on line 4-4 of Figure 3;
Figure 5 is a representation of a typical projected image of a lens blank and a computer generated target as would be seen on a computer screen of the lens blocking apparatus;
Figure 6 is a perspective view of a lens holder;
Figure 7 is a cross-sectional view along line 7-7 Figure 6;
Figure 8 is a cross-sectional view taken along line 8-8 of Figure 6;
Figure 9 is a perspective view of a lens holder similar to Figure 6 but including a second face position probe mounted atop thereof;
Figure 10 is a section on line 10-10 of Figure 3;
Figure 11 is an elevational view of an array of gauge plungers associated with the probing station;
Figure 12 is an enlarged partial cross-sectional view of a gauge plunger;

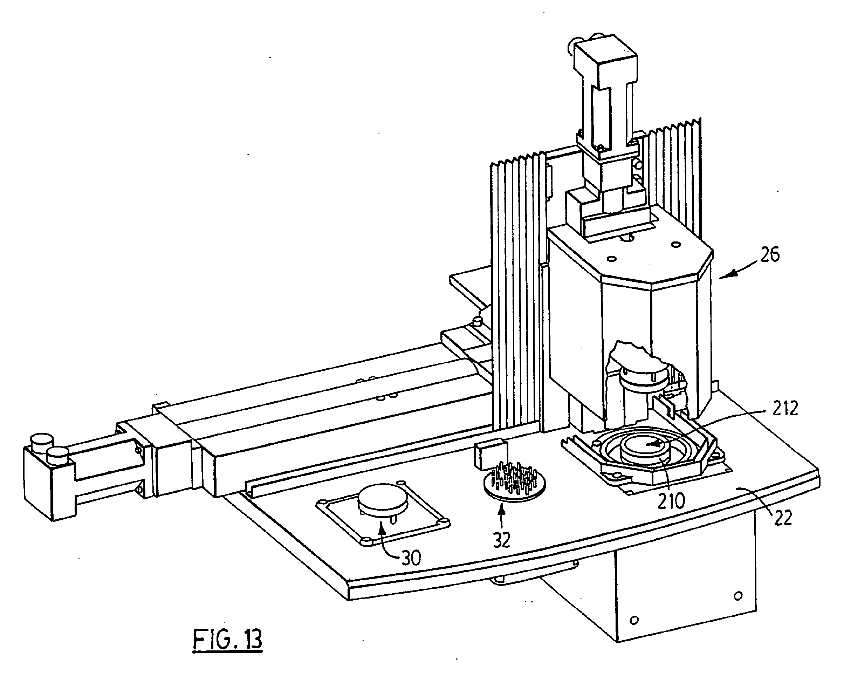

Figure 13 is a partially cut away perspective view illustrating a lens being held over a lens block by a lens transporter;
Figure 14 is a partially cut away perspective view illustrating lens placement on a lens block and also illustrating an adhesive dispenser in a retracted position;
Figure 15 is a partially cut away perspective view illustrating a lens transporter before picking up a lens blank and illustrating an adhesive dispenser in its deployed position; and,

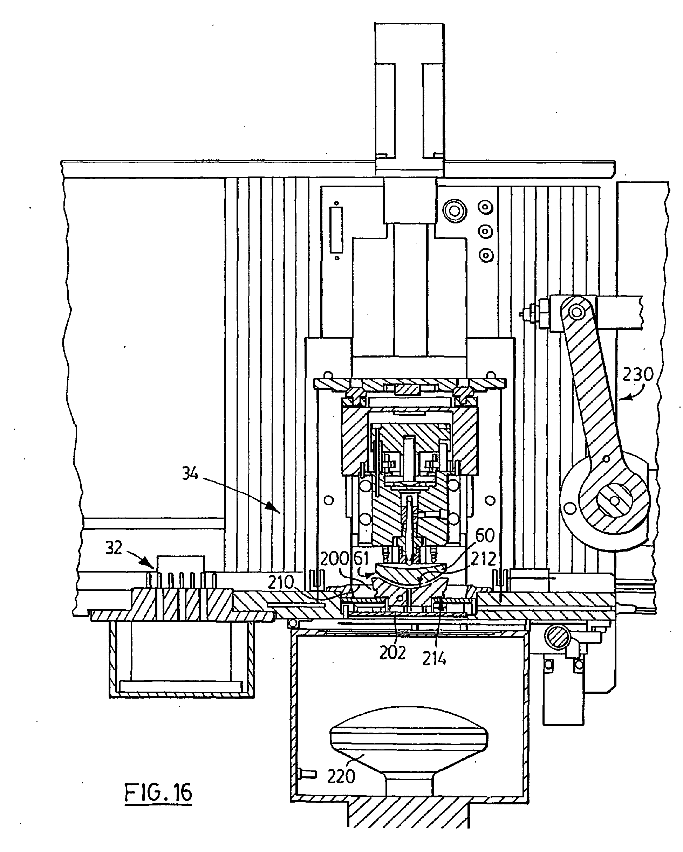

Figure 16 is a sectional view on line 16-16 of Figure 14.

### DESCRIPTION OF PREFERRED EMBODIMENTS

An apparatus for blocking an ophthalmic lens according to the present invention is generally indicated by reference 20 in the accompanying illustrations. The apparatus 20 includes a cabinet having a top 22 and a hood structure 24 for partially enclosing the top 22. A lens transporter 26 is moveably mounted on a first linear actuator 28 affixed to the top 22. The first linear actuator 28 has a first servo motor or stepper motor unit for moving the lens transporter therealong and for monitoring its position.

The apparatus 20 has, aligned with the first linear actuator 28 and incorporated into the top 22 of the cabinet, a first station 30, a probing station 32 and a lens blocking station 34. The apparatus 20 encloses a camera 21 focused on the first station 30, an adhesive reservoir 23 and a pumping unit 25 for pumping the adhesive to the blocking station 34. The apparatus further includes a controller in the form of a central processing unit 29 for controlling its operation.

The first station 30 is utilized for lens orientation to ensure that a lens blank 60 is property aligned and oriented at the outset of the lens blocking process. The imaging station has a ground glass plate 40 with three pegs 42 protruding therefrom in a triangular arrangement. The ground glass plate 40 is mounted over an opening 44 in the top 22 of the apparatus. The camera 21 is mounted under the top 22 and is oriented toward a mirror 48 on a mirror support structure 50 such that a line of sight 52 of the camera is reflected to make a right angle with the ground glass plate 40.

A light (not shown) may be shone through the lens blank 60. The camera communicates with the controller 29 to provide lens orientation information to the controller 29. The controller 29 in turn communicates with a screen 38 and includes a first image generator for generating a desired lens orientation image on the screen 38 and a second image generator which receives information from the camera 21 and generates a second image on the screen 38 indicating actual orientation of the lens blank. The desired orientation will be a predetermined orientation taking into account the shape of the particular lens blank 60 selected and how such a lens blank should be oriented during a lens generation process.

The screen acts as an image comparator and displays the first and second images relative to each other to guide manipulation of the lens blank for orienting the lens blank to correspond to the desired orientation.

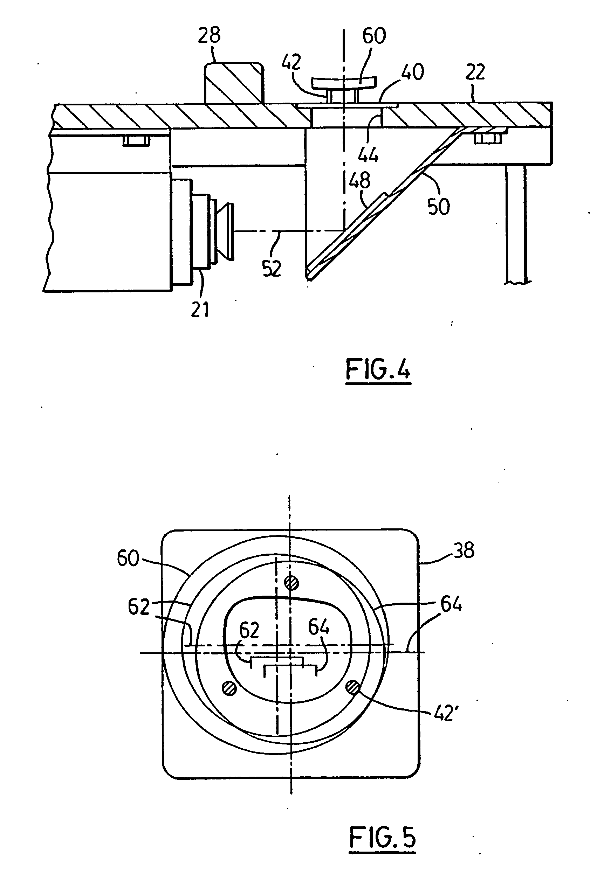

In use, the lens blank 60 is manually placed on the three pegs 42. The image of the lens blank 60 as seen by the camera 21 through the ground glass plate 40 is displayed on the screen 38 and would correspond to the image 60 in Figure 5. A typical lens blank has manufacturer's markings for orientation purposes and those manufacturer's markings are indicated by reference 62 in Figure 5. The markings of the computer generated first or target image of the lens are indicated by reference 64. The markings 62 and 64 typically include a circle around a region of the lens blank having the required optical characteristics, a pair of dashed lines showing the lens geometric center and cylindrical axis, and a rectangular symbol indicating the location of a bifocal segment (if any). The computer generated markings 64 may also contain a contour line showing an outline of an eyeglass frame to which the lens is to be mounted.

An operator of the apparatus 20 would move the lens to cause the image of the markings 62 to align with the image of the markings indicating the desired orientation 64. When proper positioning of the lens blank 60 has been effected, the operator may request the controller to register a first position and angular alignment of the lens blank 60 within a horizontal plane, hereinafter referred to as the X-Y plane.

Depending on the lens surfacing equipment utilized, the precision of lens placement may be less critical than the knowledge as to lens parameters, such as the location of a cylindrical axis and the location of a bifocal segment. It may be possible with some lens surfacing equipment to suitably position the lens without a specific predetermined relationship between the lens and a lens blank.

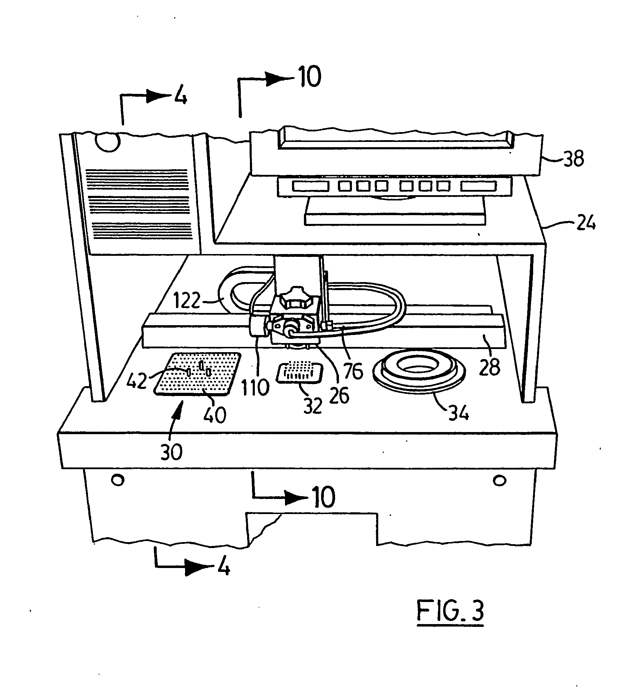

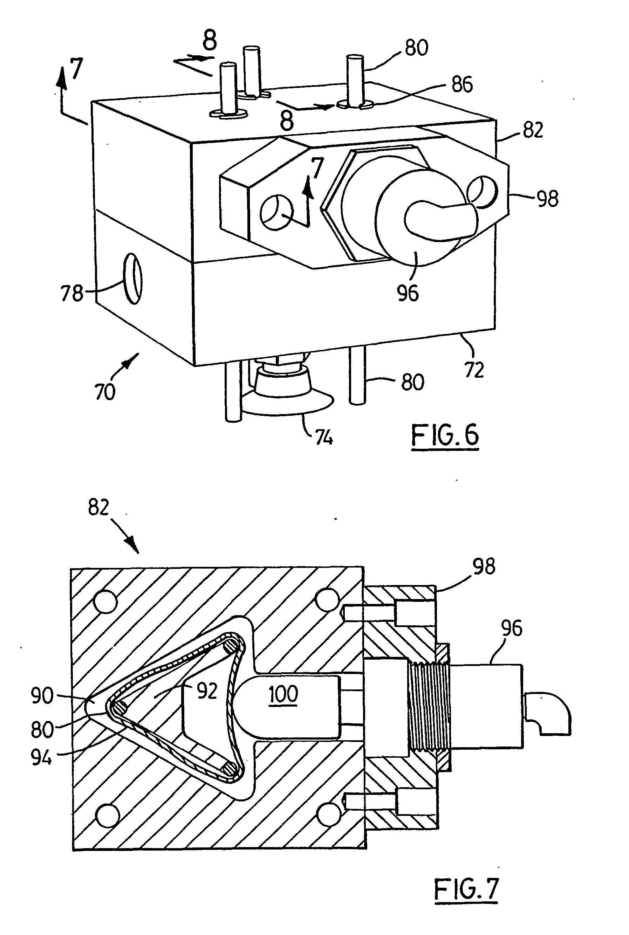

Once orientation and positional parameters of the lens blank 60 have been determined, the lens blank is transported by the transporter 26 from the first station 30 to the probing station 32. The transporter 26 may include a lens holder 70 as illustrated in Figures 6 through 8. The lens holder 70 has a manifold block 72 and a vacuum cup 74 connected to a first opening (not shown) through an undersurface of the manifold block 72. A vacuum source and tubing generally illustrated by reference 76 in Figure 3 is connected to a second opening in a manifold block and in turn communicates with the first opening. The manifold block 72 further has a third opening 78 communicating with the first opening. The lens holder 70 further comprises three prop stems 80 moveably extending in parallel alignment with a central axis of the vacuum cup 74 in a triangular arrangement around the vacuum cup 72. The lens holder 70 further has a prop stem locking mechanism 82 amounted atop the manifold block 72.

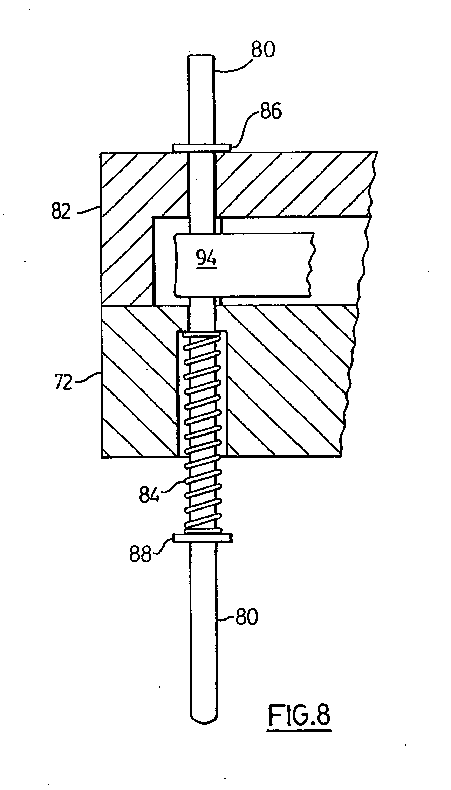

The prop stems 80 extend through the prop stem blocking mechanism 82 and through the manifold block 72 as illustrated in Figure 8. Each prop stem 80 is urged downward relative to the lens holder 70 by a spring 84 mounted over the prop stem 80. Each spring 84 is seated in a respective recess in the manifold block 72. Each prop stem 80 is held in a respective hold through the prop stem locking mechanism 82 and through the manifold block 72 by means of a first lock washer 86 mounted on the upper end of the prop stem 80 and a second lock washer 88 mounted on the prop stem 80 below the spring 84.

The prop stem locking mechanism 82 includes a module made of rigid material and having a triangular cavity 90 formed therein. The triangular cavity 90 encloses an A-shaped protrusion 92 extending from a bottom surface of the cavity 90 and having a thickness similar to the depth of the cavity. The A-shaped protrusion 92 and the triangular cavity 90 are concentric with one another and are positioned such that each of the three extremities of the A-shaped protrusion 92 is contiguous with a surface along one of the prop stems 80. The prop stem locking mechanism 82 further has in the triangular cavity 90, a flat belt 94 enclosing the A-shaped protrusion and the three prop stems 80.

A pneumatic cylinder 96 is affixed to the side of the prop stem locking mechanism 82 by a collar 98 and fasteners (not shown) through the collar 98 and threaded into the rigid module of the mechanism 82. The pneumatic cylinder 96 has an operable plunger 100 extending into the base of the A-shaped protrusion 92. Extension of the plunger 100 pushes upon the flat belt 94 and stretches the flat belt 94 around the three prop stems 80. The tension in the flat belt 94 causes each prop stem 80 to be pulled and held tightly against a respective extremity of the A-shaped protrusion 92.

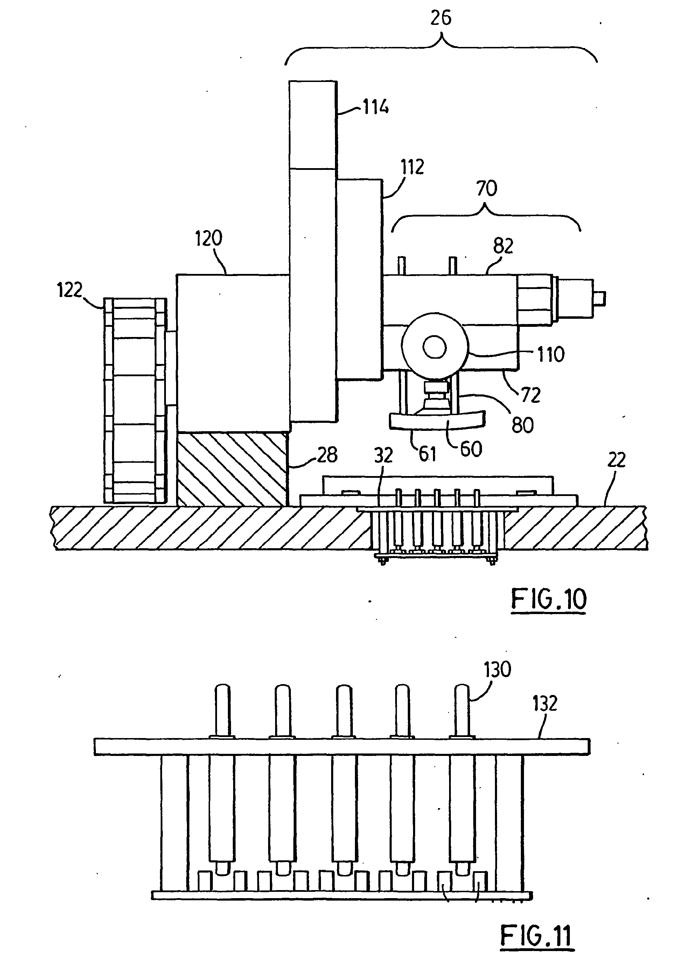

The action of the pneumatic cylinder 96 is controlled by the controller 29 in response to a vacuum sensor switch 110 which is illustrated in Figures 3 and 10. The vacuum sensor switch 110 is connected to the third opening 78 and monitors the vacuum level in the vacuum cup supply port. In operation, the vacuum cup 74 is lowered on a lens blank 60 and the vacuum cup 74 and the prop stems 80 are brought into contact with the lens blank 60. The vacuum level in the vacuum cup supply port increases in response to the cup being sealed by the lens blank 60 which causes the vacuum sensor switch 110 to send a signal to the controller 29 which in turn activates the pneumatic cylinder 96 for locking the position of the prop stems 80. The lens blank is thereby rigidly retained in the vacuum cup 74.

The raising and lowering movements of the vacuum pick-up device are effected by a second linear actuator 112, also shown in Figure 10. The movements of the second linear actuator 112 are controlled by a second servo motor or a second motor/encoder unit 114 such that after an initial calibration, a position of the vacuum cup 74 is always known precisely. When the lens holder 70 picks up the lens blank 60 from the first station 30, the controller reads the vacuum sensor switch 110 and the signal of the second motor/encoder unit 114 and registers a first vertical position of a concave surface of the lens blank 60 relative to a vertical axis, hereinafter referred to as the Z axis.

Although vacuum cups in general are known to be somewhat flexible, the locked in place prop stems 80 ensure that the first vertical position registered by the controller 29 is maintained throughout the remaining functions of the apparatus 20.

It will be appreciated that other suitable pick-up devices and control systems for such devices may be devised which would function adequately well in the apparatus 20. For example the vacuum cup might include a rod-like probe mounted centrally therein and a proximity or optical switch for monitoring of the probe rather than a vacuum switch. Also a collet type clamping arrangement of the prop stems 80 may be practised.

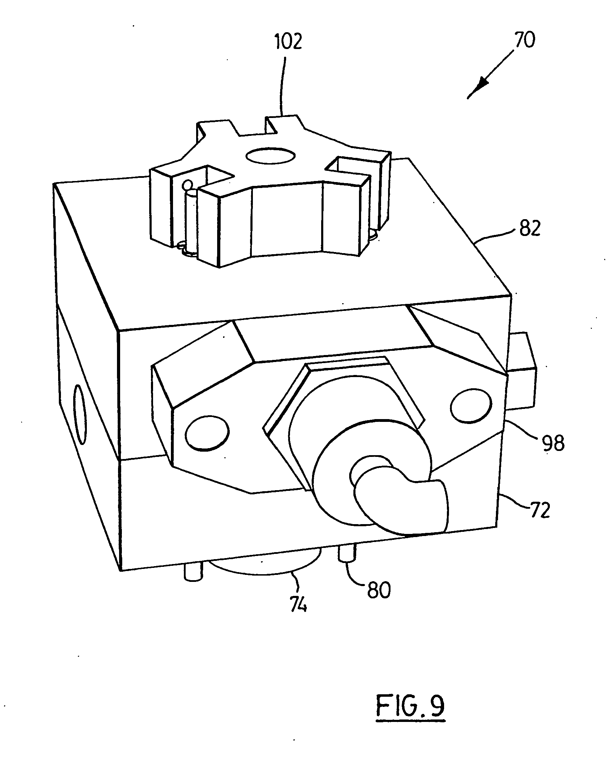

The lens holder 70 preferably has an electronic module 102 containing photoelectric switches for monitoring movement of the prop stems 80. The electronic module 102 acts as a second face position probe for determining the position of an upper or second face of the lens blank 60. The electronic module 102 is preferably mounted atop the prop stem locking mechanism 82. As illustrated in Figure 9, signals from the electronic module 102, the vacuum sensor switch 110 and the second motor/encoder unit 114 when the vacuum pick-up device is brought in contact with the second surface of the lens blank 60 are integrable for determining or verifying the position of the second face 60.

As illustrated in Figure 10, the lens transporter 26 is mounted on a carrier block 120 affixed to the moveable member (not shown) of the first linear actuator 28. The control wiring between the controller 29 and the lens blank manipulator 26 is preferably mounted over a flexible cable tray 122 affixed to the top surface 22 of the apparatus 20 and to the carrier block 120.

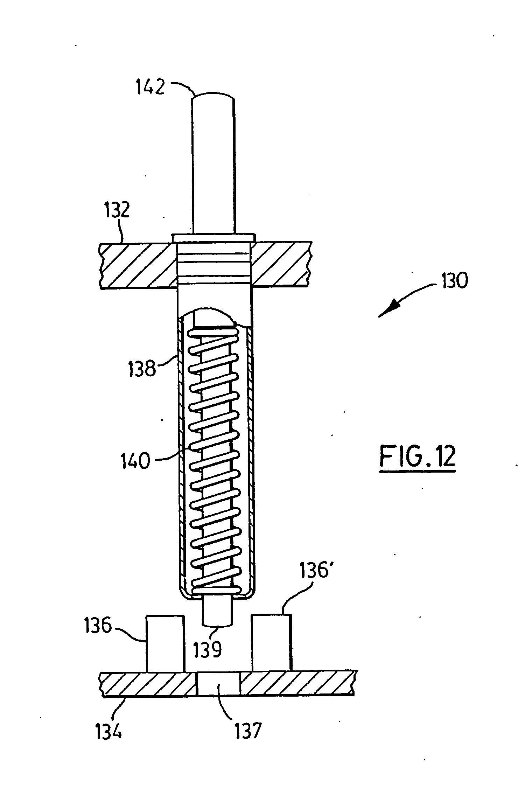

Once the lens blank 60 is held by the lens holder 70 the lens blank 60 is transported from the first station 30 to the probing station 32. The structural details of the probing station 32 are illustrated in Figures 11 and 12.

The probing station 32 has a rectangular array of gauge plungers 130 protruding upwardly through a cover plate 132. The gauge plungers 130 extend under the cover plate 132 and near a circuit board 134 affixed at a distance from the cover plate. The circuit board 134 has a plurality of photoelectric switches each comprising a photoelectric emitter 136 and a photoelectric receiver 136'. Each photoelectric switch 136-136' is positioned in close proximity to the lower end of the plunger 130 for monitoring a downward displacement of that plunger 130.

Each gauge plunger 130 comprises a tubular housing 138 which is affixed to the cover plate 132. A rod 139 is moveably mounted in the housing 138 and is urged upwardly by a spring 140. Each rod 139 has a rounded tip 142 extending above the cover plate 132. The circuit board 134 further has a hole 137 between each emitter 136 and receiver 136' for allowing a downward movement of each rod 139 through the circuit board 134 when the rounded tip 142 is depressed.

When the lens blank 60 is lowered on the probing station with a convex surface ("first face" 61) of the lens blank 60 contacting the tips 142 of the gauge plungers 130, the controller 29 reads the encoder of the second stepper motor/encoder unit 114 and the signal from each photoelectric switch 136-136'. The controller 29 integrates the signals of the encoder and switches 136-136' to determine the curvature of the first face 61 and a position of this curvature along the Z axis.

Once the first face 61 of the lens blank 60 has been probed, the lens blank is transported from the probing station 32 to the blocking station 34. The blocking station includes a UV and visible light transmissive lens block support 200 for receiving and supporting a lens block 210 with a lens mounting face 212 of the lens block facing upwardly. The lens block should be of a transparent material capable of transmitting at least light in the UV spectrum and preferably also in the visible spectrum.

A UV light source 220 is associated with the lens block support in that it is mounted so as to direct light through an aperture 202 in the lens block support which in turn directs the UV light through the UV transmissive lens block 210. A light source actuator which may form part of the controller 29 is connected to the light source to control activation and de-activation of the light source 220.

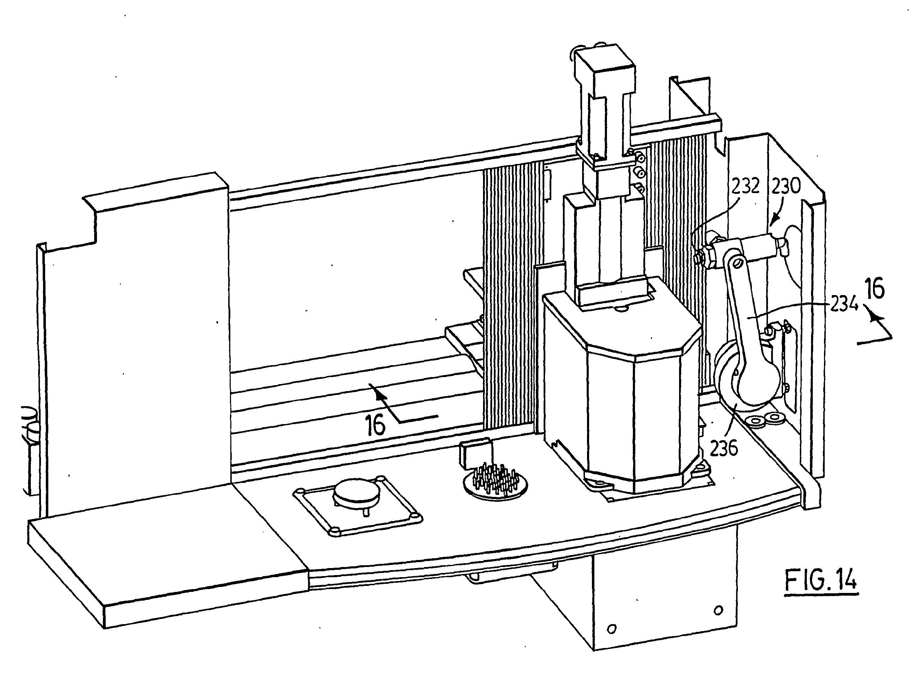

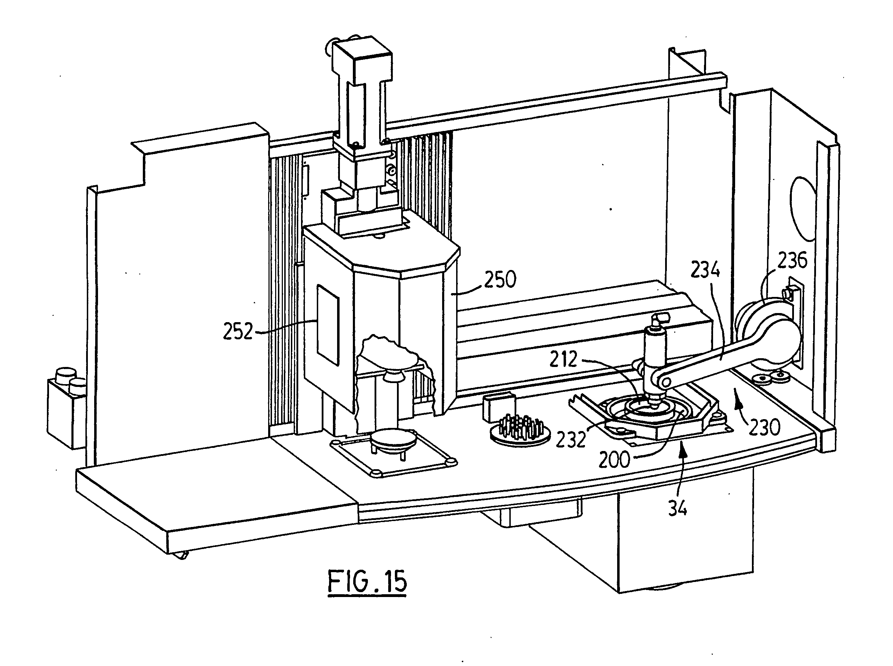

A dispenser 234 for dispensing an adhesive curable by UV/visible light is generally indicated by reference 230. The dispenser 230 has a dispenser nozzle 232 at one end of a dispenser arm 234. An arm actuator which may be a motor such as illustrated by reference 236 or a linear or other actuator may be provided to move the arm 234 from a deployed position adjacent the lens mounting face 212 (Figure 15) and a retracted position clear of the lens mounting face 212 (Figure 14) and the lens transporter 26 so as not to interfere with the placement of the lens over the lens mounting face 212 of the lens block 210.

The dispenser arm 234 merely controls position of the dispenser nozzle 232. Accordingly the dispenser arm 234 can be telescopic rather than rotatable as illustrated and possibly controlled by a linear actuator such as a fluid pressure actuated piston within a cylinder.

The nozzle 232 fluidly communicates with the adhesive reservoir 23 through the pump 25 which supplies the adhesive to the nozzle 232. Alternatively, the adhesive reservoir 23 may be pressurized thereby obviating the need for a pump.

The nozzle 232 is equipped with a valve or other shut-off mechanism which communicates with the controller 29 to control dispensing of the adhesive through the nozzle 232 when the nozzle is in the deployed position. Different control arrangements may be used. A simple form of control is to monitor the time that the nozzle 232 is held open. Other controls such as a metering pump may be utilized. Generally whatever control is selected should dispense a measured amount of adhesive which will substantially fill the gap between the first face of the lens blank 60 and the lens mounting face 212 of the lens block 210.

The UV light source 220 preferably incorporates a flash lamp such as manufactured by Xenon Corporation which emits a pulse of high intensity short duration light within the UV spectrum and in the visible spectrum. An example of this light source 220 is Xenon Model RC-742 with a flat spiral 4.2" lamp or a 3.5" flat spiral xenon gas-filled, gallium-doped clear fused quartz lamp. A single or a double-headed system is suitable. With the double-headed system, a common power supply may be shared between the blocking and the wiring functions. One embodiment of this apparatus is described in U.S. Patent No. 4,167,669, which is herein incorporated by reference. The wavelength of the light should be on the order of 250 to 500 nanometers. In practice it has been found that the shorter wavelength light contributes to the speed of curing while the longer wavelength effects a better depth of cure.

The Xenon light generates a nominal amount of heat which is desirable from an equipment standpoint as compared with a mercury vapor lamp. The range of wavelengths is broader and more selectable than with a conventional mercury-based UV lamp and furthermore the Xenon bulbs tend to last much longer than mercury-based UV lamps.

Flash lamp technology is able to produce very high peak power, in the order of 2.7 megawatts. Fusion UV microwave-activated mercury and metal halide lamps produce a continuous 1.8 kilowatts power output - over 1,000 times less. This high peak power enables light to penetrate over long distances or even through UV opaque materials. In the present application, high output power is used to speed cure and penetrate the lens block 210.

A further advantage to the flash lamp is through the use of gallium-doped quartz enveloping Xenon gas in the lamp, ozone gas is not produced. This makes the apparatus safer, less hazardous, easier to engineer, less expensive to manufacture and easier/more economical to maintain as it does not require exhausting ozone gas to the atmosphere. Ozone gas production is a by-product of mercury discharge lamps.

Additionally, the wavelength/intensity graph for a Xenon flash lamp is devoid of wavelength spikes - intensity being smooth and continuous over the UV-C, UV-B, UV-A and visible wavelengths. This simplifies and opens up photoinitiation formulation possibilities in the adhesive as the wavelength absorptions of the photoinitiator are not critical to the efficiency of the curing process. Mercury discharge lamps in contrast have defined intensity spikes at specific wavelengths. In these systems, photoinitiators must overlap with these wavelength spikes or the material will not cure. Non-efficient and deficient wavelength overlap between a mercury lamp and photoinitiator also retards the rate of cure - the lamp output only covers a range what the photoinitiator could absorb.

Another advantage to a Xenon flash lamp is instant on/off capability. This is not possible with mercury or metal halide lamps and simplifies the design, manufacture, operation and safety aspects of the blocking apparatus of the present invention.

Also, the geometry of Xenon flash lamps is virtually unlimited. Good results have been obtained with spiral lamps of about 3.5 inches diameter which conforms to typical circular lens blanks which may vary from 3 inches to 3.5 inches in diameter. In contrast fusion UV lamps are restricted to linear format because of the type of lamp and because of the restrictions of microwave-actuated ignition.

In order to protect an operator's eyes from damage associated with the intense UV light, a UV shield 250 may be provided over the lens transporter which registers with the lens block support 200 during the final stages of blocking. The UV shield may also be associated with a safety sensor schematically shown at 252 in Figure 15 which causes the transporter 26 to stop if the sensor 252 senses an object in the path of the transporter 26.

In use, a measured amount of UV curable adhesive is dispensed on the lens mounting face 212 of the lens block 210. The lens blank 60 is moved over the lens bock 210 with the first face 61 of lens blank facing the mounting face 212. The lens transporter 26 moves the lens blank 210 toward to the lens mounting face 212 and into the adhesive 242 until the first face 61 is a predetermined distance from the lens mounting face 212.

Because the geometry and spatial relationships between the first face 61 and the lens mounting face 212 are known, the amount of adhesive required can be calculated and dispenses automatically without operator intervention. Many prior processes require an operator to monitor and control the application of the bonding agent.

At this stage, UV light is generated and transmitted through the lens block 210 at a wavelength, and intensity and for a duration sufficient to cause the adhesive to cure thereby bonding the lens blank 60 to the lens block 210.

The lens block 210 has an indexing face 214, which during lens generation would typically abut against a lens chuck. The controller 29 determines the height of the lens blank 60 above the indexing face 214 and references the first face surface contour data to a datum associated with the indexing face 214 and records the reference to data. In this manner, the curvature and position of the first face 61 of the lens 60 can be determined in subsequent lens generation steps based on the position of the datum. Although an indexing face 214 is suggested, it will be appreciated that other parts of the lens block 210 may be relied upon as a reference datum.

As a final step, the lens block 210 with the lens 60 attached thereto would be removed from the blocking station 34 and released from the lens transporter 26.

Although the term "adhesive" is used herein, it will be appreciated that the adhesive properties are initiated by the exposure to radiation and the standing composition may be more of a "coating composition" than an adhesive prior to such irradiation.

Various properties are desirable in the coating composition. The coating composition should have a viscosity sufficient to avoid spillage into the lens block support 200 without being so high as to be time consuming to dispense and expensive to manipulate. The viscosity should be almost gel-like but dispensable without specialized equipment. A viscosity on the order of 50,000 cps is preferred.

The dimensional change of the coating composition upon curing is an important factor. Too great a change will cause lens deformation during lens generation by imparting too high a stress on the lens blank 60. A high dimensional change can be ameliorated to some extent by a longer curing time, however this is undesirable. Preferably the curing time should be less than 30 seconds and more preferably less than 15 seconds, and still more preferably on the order of 5 to 10 seconds.

The flexibility of the cured coating composition is also an important factor. From a machining standpoint the adhesive should be as hard as possible to provide as much support as possible to the lens 60 during generation. If however the adhesive is too hard, vibration and forces associated with the lens generation process may have the effect of prematurely de-blocking the lens. Some flexibility is desirable to absorb some of the cutting energy while not so much flexibility as to provide undesirable deflections in response to the application of a cutting tool. Furthermore, it has been found that harder adhesives tend to have lower adhesions.

The adhesive should be such as to be removable without damage or residue. In other words, the adhesive must be capable of total adhesive failure upon requirement. In order to expedite de-blocking by minimizing the time for de-blocking, a mechanically deblockable adhesive is preferred over one which requires prolonged soaking as part of the de-blocking procedure.

Furthermore, the adhesive is preferably of at least a quasi-thermosetting nature in that in will not deform under heat which may be imparted to the lens in curing coating compositions and through friction generated by the lens surfacing procedure.

In one embodiment, the coating composition comprises a radiation curable organic resin, an adhesives promoter and a cohesive hardener if the composition is intended to be cured by ultraviolet radiation, the composition includes a photoinitiator.

It has been found that a particularly useful coating composition may be produced by combining:
an organic resin (meth)acrylic-capped prepolymer selected from the group consisting of aliphatic urethanes in an amount of from 49% by mass to 97% by mass;
an adhesion promoter selected from the group consisting of ethylenically-capped phosphoric ester and ethylenically-capped carboxylic ester in an amount of from 0.01% by mass to 10% by mass;
a plastic adherent selected from the group consisting of isobornyl (meth)acrylate in an amount of from 5% by mass to 25% by mass;
a cohesive hardener selected from the group consisting of multi-functional (meth)acrylic-caped diluents in an amount of from 0.1% by mass to 25% by mass;
a diluent selected from the group consisting of (meth)acrylic-capped poly (ethyleneglycol), (meth) acrylic-capped poly (propylene glycol), (meth)acrylic-capped neopentylglycol and (meth)acrylic-capped glycerol in an amount of from 0.001% by mass to 37% by mass;
a primary α-cleavage, unimolecular Norrish type I photoinitiator selected from the group consisting of acyl phosphine oxide derivatives in an amount from 0.1 % by mass to 10% by mass; and,
a secondary α-cleavage, unimolecular Norrish type I photoinitiator selected from the group consisting of acetophenone derivatives in an amount of from 0.1 % by mass to 10% by mass.

In principle, the organic resin may be curable by light, electron beam, or thermally. In one embodiment, the organic resin is able to be cured by light radiation, such as ultraviolet light or high frequency visible light.

The organic resin may be at least one of or a combination of an aliphatic urethane, an aromatic urethane, a polyester, a polyether or an epoxy. In one embodiment, the organic resin is a mono-, or multi-functional ethylenically-capped prepolymer. The prepolymer may include any one of an aliphatic urethane, aromatic urethane, polyester, polyether or epoxy backbone. In another embodiment, the resin in an aliphatic urethane oligomer, such as a di-functional acrylate-capped aliphatic urethane oligomer.

In another embodiment, the organic resin may be a difunctional (meth)acrylic-capped prepolymer selected from the following sources: Akzo Nobel Actilane 200 series; Rahn Genomer 4000 series; Henkel Cognis Photomer 6000 series; Sartomer CN-900 series; Bomar Specialties BR-300/BR-400/BR-500/BR-700 and BR-900 series; UCB Chemicals Radcure Ebecryl series or their equivalents.

The adhesion promoter may be a composition that may or may not be radiation-curable that has the property of enhancing adhesion to plastic materials that has used for the purposes of an ophthalmic lens. The adhesion promoter may be an electrophilic, electron deficient substance such a trivalent boron or aluminum compound, for example, boron trifluoride or aluminum trichloride. In another embodiment, the adhesion promotor is an acidic substance that would be able to dissociate in an aqueous solution or water to yield hydrated protons such as an organic or inorganic acid, for example carboxylic acids, phosphoric acid or sulfuric acid. This molecule or combinations of molecules may or may not be radiation-curable yet all possess the property of enhancing adhesion to plastic materials that are used for the purposes of an ophthalmic lens.

In one embodiment, the adhesion promoter is a mono-or di-functional ethylenically-capped phosphoric acid ester or ether or an ethylenically-functionalized carboxylic acid where the ethylenic group may comprise a vinyl ether, (meth)acrylate ester, (meth)acrylic acid or any other ethylenic function that has the ability to crosslink under the action of radiation of an appropriate wavelength. A suitable adhesion promoter has been found to be the diacrylate ester of phosphoric acid (Ebecryl 170). Other suitable adhesion promoters may be selected from the following sources: Rahn Additive 97-070; Henkel Cognis Photomer 4173; UCB Chemicals Radcure Ebecryl 170; UCB Chemicals Radcure Ebecryl 168; UCB Chemicals Radcure β-CEA or their equivalents.

The plastic adherent may be any molecule, that may or may not be radiation-curable, that has the property of adhesion to plastic materials, such as thermoplastic polycarbonate, thermosetting polycarbonate, polyurethane, or any plastic material that is used for the purposes of an ophthalmic lens. In one embodiment, the plastic adherent includes isobornyl acrylate, isobornyl methacrylate, or tetrahydrofuryl acrylate. A suitable plastic adherent may be selected from the following sources: Sartomer SR-506; Sartomer SR-423; UCB Chemicals Radcure IBOA; Rahn Genomer 1121; Ciba Ageflex IBOMA; Ciba Ageflex IBOA or their equivalents.

The hardener may be any molecule which may or may not be radiation-curable that has the property of increasing the cohesive strength of the radiation-curable material. In one embodiment, the hardener is a multifunctional ethylenically-capped monomer or oligomer with at least three functional groups. The hardener may be triacrylate, tris (2-hydroxyethyl) isocyanuarate triacrylate, dipentaerythritol pentaacrylate, pentaeyrthritol tetraacrylate, ethoxylated (4) pentaerythritol tetraacrylate, ethoxylated (3) trimethylolpropane triacrylate, ethyloxylated (6) trimethylolpropane triacrylate, or ethyloxylated (9) trimethylolpropane triacrylate. A suitable hardener may be a tri-, tetra-, penta-, or hexa-functional cohesive hardener selected from the following sources: Sartomer SR-351, SR-368, SR-368D, SR-399, SR-454, SR-499, SR-502, Henkel Cognis Photomer 4006 or their equivalents.

Suitable photoinitiators include acetopherone derivatives, such as Benzildimethylketal / 1-Hydroxycyclohexylphenylketone / 2-hydroxy-2-methyl-1-phenylpropan-1-one (Ciba Darocur 1173). Suitable photoinitiators also include acyl phosphine oxides such as: 2,4,6-trimethylbenzoyldiphenylphosphine oxide (BASF TPO) /Bis(2,6-dimethoxybenzoyl)-2,4,4-trimethylpentylphosphine oxide / Bis(2,4,6-trimethylbenzoyl)phenylphosphine oxide. One suitable photoinitiator is a photoinitiator that can undergo Norrish-type 1 cleavage.

In one embodiment, the photoinitiator includes a primary photoinitiator and a secondary photoinitiator. Where primary and secondary photoinitiators are used, the primary and secondary photoinitiators may be any molecule or combination of molecules that possesses a broad range of wavelength absorptions in the ultra-violet and visible regions of the electromagnetic spectrum that causes the molecule or molecules to undergo unimolecular Norrish-type I cleavage thereby decomposing into fragments that catalyze the polymerization of the radiation-curable adhesive.

The primary photoinitiator may be a primary acyl phosphine oxide derivative photoinitiator selected from the following sources: Ciba Specialty Chemicals; ChemFirst Fine Chemicals; BASF; Rahn; Spectra Group Ltd., Inc.,; Cognis Corporation; Miwon Commercial Co., Ltd.; Dow Chemicals or their equivalents.

The secondary photoinitiator may be a secondary acetophenone derivative photoinitiator selected from the following sources: Ciba Specialty Chemicals; ChemFirst Find Chemicals; BASF; Rahn; Spectra Group Ltd., Inc.; Cognis Corporation, Miwon Commercial Co., Ltd.; Dow Chemicals or their equivalents.

In one embodiment, the coating composition is characterized by a hardness value or property from about 47A to about 98A. In a preferred embodiment, the hardness value is greater than about 75A. Significant enhancement of optical accuracy for generated plastic ophthalmic lenses was observed for radiation-curable materials for hardness values above 75A. Even more preferably, the hardness value is greater than about 88A. Hardness values were measured using a durometer and, in particular, a Rex Durometer Type A Model 1700 from Rex Guage Co., Glenview, Illinois, U.S.A. As a point of reference, 0A=56 grams deflection load and 100A=822 grams deflection load. It is a linear calibration curve between these two points.

An example of a method used to measure hardness will now be explained. A quantity of radiation-curable material was placed between a block and a lens and exposed to ultraviolet and visible radiation such that crosslinking was complete. The resultant 1 mm thick disc was cut into six substantially equal areas and stacked to yield a 6 mm stack of cured material supported on a bench. The Rex Durometer Type A Model 1700, as described above, was then pressed into the stack and the hardness value observed on an integral dial guage was recorded. The test was repeated at least four times and the mode, or most frequently observed value, was taken as the true hardness of the material.

In one embodiment, the coating composition is characterized by a viscosity within the range of from about 10,000 CP to about 70,000 CP, where the viscosity values are referenced to 25°C.

In one embodiment, the coating composition comprises:
the aliphatic urethane oligomer known as *Sartomer CN-966J75 in amounts of from 80% by mass to 90% by mass or its equivalent;
the adhesion promoter known as *UCB Chemicals Radcure Ebecryl 170 in amounts of from 1% by mass to 5% by mass or its equivalent;
one of plastic adherent known as *Sartomer SR-506 in amounts of from 19% by mass to 23% by mass or its equivalent;
the hardener known as *Sartomer SR-454 in amounts of from 5% by mass to 20% by mass or its equivalent;
the primary photoinitiator known as BASF TPO in an amount of from 2% by mass to 5% by mass; and,
the secondary photoinitiator known as *Ciba Darocur 1173 in an amount of from 1% by mass to 4% by mass.

A suitable coating composition based on the above criteria is as follows:
the aliphatic urethane oligomer known as *Sartomer CN-966J75 in an amount of 85% by mass;
the adhesion promoter known as *UCB Chemicals Radcure Ebecryl 170 in an amount of 1 % by mass;
the hardener known as *Sartomer SR-454 in amounts of 8% by mass;
the primary photoinitiator known as BASF TPO in an amount of 2% by mass; and
the secondary photoinitiator known as *Ciba Darocur 1173 in an amount of 3% by mass.
   *trademarks

The hardness of this formulation, measured as described above was 88A. The viscosity was 50,000CP, referenced to 25°C.

The above description describes an apparatus in which the lens block is placed in the support and adhesive is subsequently applied to the lens block. Other arrangements are feasible. For example, the adhesive may be applied to the lens block in advance of the lens block being mounted in the support or the adhesive may be supplied to the lens rather than the lens block. Furthermore, it may be possible to effect relative movement of the lens blank and lens block toward each other by moving both or by holding one stationary and moving the other. Accordingly the expansion, "urging the lens blank toward the lens block" should be given such a broad interpretation. As a practical matter it is generally expected that the lens block will be placed with the lens mounting surface facing upwardly and the adhesive subsequently applied. While this may be a preference, it is not an absolute requirement.

The above description is illustrative of a presently preferred embodiment of the present invention. It is not intended in a restrictive sense. Variations may be made without departing from the scope of the invention as defined by the claims set out below.

## Claims

1. A method for blocking a lens blank (60) that has a first face (61) and a second face, opposite said first face (61), the method comprising the steps of:
(i) obtaining a lens block (210) which is comprised of a transparent material capable of transmitting at least light in the UV spectrum and also in the visible spectrum, said lens block (210) having a lens mounting face (212) capable of supporting said lens blank (60) over a majority of said first face (61) of said lens blank (60);
(ii) applying an adhesive curable by at least one of visible and UV light to at least one of said first face (61) of said lens blank (60) and said lens mounting face (212) of said lens block (210);
(iii) urging said lens blank (60) toward said lens block (210) with said first face (61) of said lens blank (60) facing said lens mounting face (212) of said lens block (210), said second face of said lens blank (60) facing away from said lens mounting face (212) of said lens block (210), so that said adhesive is applied over a majority of said first face (61) of said lens blank (60);
(iv) generating UV and visible light and transmitting the light to said adhesive through said lens block (210), said light being of a wavelength and an intensity and applied for a time interval sufficient to cause setting of said adhesive thereby bonding said lens blank (60) to said lens block (210);
(v) said adhesive being selected to have a dimensional change upon setting low enough to be capable of setting in less than 30 seconds without imparting undue stresses on said lens blank (60) and capable of total adhesive failure without damage of lens or lens blank (60) or leaving residue on the lens upon application of a sufficient stripping force acting between said lens blank (60) and said lens block (210) so that said lens blank (60) is removable from said lens block (210) using mechanical separation means only.

2. The method according to claim 1, wherein:
said lens block (210) is oriented with said lens mounting face (212) substantially horizontal during steps (ii), (iii) and (iv); and,
said lens blank (60) is maintained at a predetermined orientation relative to said lens block (210) during steps (iii) and (iv).

3. The method according to claim 2, wherein:
the contour of said first face (61) of said lens blank (60) is determined prior to step (iii); and,
said first face (61) of said lens blank (60) is maintained at a predetermined spaced apart distance from said lens mounting face (212) of said lens block (210) during step (iv).

4. The method according to claim 1, further comprising the following steps prior to step (i):
placing said lens blank (60) on a lens orienting station (30);
determining lens orientation and position parameters;
transporting said lens blank (60) to a probing station (32) while maintaining said orientation from the foregoing step; and,
mapping a first face (61) contour of said lens blank (60) while maintaining said orientation and generating and storing surface contour data.

5. The method according to claim 4, wherein step (iii) further comprises the following substeps:
transporting said lens blank (60) to a lens blocking station (34) and positioning said lens blank (60) over said lens mounting face (212) of said lens block (210) installed in said lens blocking station (34) with said first face (61) of said lens blank (60) facing said lens mounting face (212) of said lens block (210) while maintaining said orientation; and,
moving said lens blank (60) toward said lens mounting face adhesive until said first face (61) of said lens blank (60) is at a predetermined distance from said lens mounting face (212) and said adhesive extends between said lens mounting face (212) and said first face (61) of said lens blank (60).

6. The method according to claims 4 and 5, further comprising the following steps after step (iv):
referencing said first face (61) surface contour data to a datum associated with said lens block (210) and recording the referenced data; and,
removing said lens block (210) with said lens blank (60) attached thereto from said lens blocking station (34).

7. The method according to claim 6, wherein said lens blank (60) has a second face opposite said first face (61) and including the further steps of:
determining a position of said second face; and,
referencing said position of said second face relative to said datum on said lens block (210).

8. The method according to claim 6, wherein said adhesive is selected to:
be of a sufficiently high viscosity to avoid spillage during step (iv) and the steps of claim 6;
upon curing provide support to resist lens deflection during lens generation; and,
absorb vibration imparted to said lens by a lens surfacing tool during said lens generation.

9. The method according to claim 8, wherein said adhesive is further selected to not deform under heat associated with lens coating curing.

10. The method according to claim 4, wherein the step of determining lens orientation and position parameters comprises the following substeps:
(a) generating a desired lens blank position and orientation image on a screen (38);
(b) generating an image on said screen (38) depicting the orientation of said lens blank (60) on said lens orienting station (30); and,
(c) positioning and orienting said lens blank (60) to cause the image in substep (b) to correspond to the image in substep (a).

11. The method according to claim 9, wherein the step of determining lens orientation and position parameters is carried out using computer image recognition to generate orientation and position parameters which are stored and form part of said first face surface contour data according to claim 4.

12. An apparatus (20) for blocking an ophthalmic lens blank (60) that has a first face (61) and a second face, opposite said first face (61), using the method according to one of the preceding claims, comprising:
(A) a lens blank receiving station (30) for receiving said lens blank (60);
(B) a lens blocking station (34) having a lens block support (200)
for receiving a lens block (210) that is comprised of a transparent material capable of transmitting UV and visible light and has a lens mounting face (212) capable of supporting said lens blank (60) over a majority of said first face (61) of said lens blank (60), and
for supporting said lens block (210) with said lens mounting face (212) of said lens block (210) in a desired orientation,
said lens block support (200) as well being capable of transmitting UV and visible light;
(C) a lens transporter (26) having a lens holder (70) for selectively picking up and holding said lens blank (60), moving said lens blank (60) over said lens block support (200) and moving said lens blank (60) toward said lens block support (200) so that said first face (61) of said lens blank (60) faces said lens mounting face (212) of said lens block (210) with a gap in between;
(D) a light source (220) for emitting UV and visible light associated with said lens block support (200) in that it is mounted so as to direct light through an aperture (202) in said lens block support (200) which in turn directs said light through said lens block (210);
(E) a light source actuator connected to said light source (220) for controlling activation and deactivation of said light source (220);
(F) an adhesive dispenser (230) associated with said lens blocking station (34) for dispensing a UV and visible light curable adhesive for bonding said lens blank (60) on said lens mounting face (212) of said lens block (210);
(G) a dispenser actuator connected to said dispenser (230) for causing said dispenser (230) to dispense a measured amount of adhesive that substantially fills said gap between said first face (61) of said lens blank (60) and said lens mounting face (212) of said lens block (210); and,
(H) a controller (29) communicating with said transporter (26), said dispenser actuator and said light source actuator to control the operation thereof.

13. The apparatus (20) according to claim 12, wherein:
said dispenser (230) includes a dispenser nozzle (232) and a nozzle manipulator (236) connected thereto for moving said nozzle (232) between a deployed position adjacent said lens mounting face (212) of said lens block (210) supported on said lens block support (200) and a retracted position clear of said lens blank (60) and said transporter (26); and,
said controller (29) further communicates with said nozzle manipulator (236) to control deployment and retraction of said nozzle (232).

14. The apparatus (20) according to claim 13, wherein said lens blank receiving station (30) includes:
a lens orientation indicator having a first image generator for generating a desired lens orientation image and a second image generator for generating a second image indicating actual orientation of said lens blank (60); and,
an image comparator (38) communicating with said first and second image generators for displaying said first image relative to said second image to guide manipulation of said lens blank (60) to cause said actual orientation to correspond to said desired orientation.

15. The apparatus (20) according to claim 14, wherein:
said apparatus (20) further includes a probing station (32) on which said lens blank (60) may be placed by said lens transporter (26), said probing station (32) including a plurality of lens probing elements (130) for mapping the contour of a first face (61) of said lens blank (60) to determine a first face contour;
said controller (29) communicates with said probing station (32) to receive information on the contour of said first face (61) relative to a first datum;
said transporter (26) is configured to move said lens blank (60) between said probing station (32) and said blocking station (34) while maintaining said lens blank (60) in said desired orientation;
said controller (29) is configured to cause said transporter (26) to place said lens blank (60) adjacent said lens block (210) with said first face (61) at a predetermined fixed distance apart from said lens mounting face (212) and maintain said fixed distance during curing of said adhesive; and,
said controller (29) translates said first face contour information to a second datum associated with said lens block (210) and stores said information relative to said second datum.

16. The apparatus (20) according to claim 15, wherein said lens transporter (26) includes a second face position probe (102) for determining the position of said second face relative to said first face (61) and transmits said second face position to said controller (29).

17. The apparatus (20) according to claim 15, wherein:
said dispenser nozzle (232) is mounted on a dispenser arm (234) movably mounted to a dispenser body;
said dispenser (230) includes an arm actuator (236) communicating with said controller (29) for moving said dispenser arm (234) relative to said dispenser body between said deployed and retracted positions;
said nozzle (232) fluidly communicates with a UV curable adhesive source (23) having pressurizing means for supplying said UV curable adhesive to said nozzle (232); and,
said controller (29) communicates with a shut-off mechanism associated with said nozzle (232) to control dispensing of said adhesive through said nozzle (232).

18. The apparatus (20) according to claim 16, wherein:
said dispenser nozzle (232) is mounted on a dispenser arm (234) movably mounted to a dispenser body;
said dispenser (230) includes an arm actuator (236) communicating with said controller (29) for moving said dispenser arm (234) relative to said dispenser body between said deployed and retracted positions;
said nozzle (232) fluidly communicates with a UV curable adhesive source (23) through a pump (25) for supplying said adhesive to said nozzle (232); and,
said controller (29) communicates with a shut-off mechanism associated with said nozzle (232) to control dispensing of said adhesive through said nozzle (232).

19. The apparatus (20) according to claim 18, wherein said apparatus (20) includes a UV shield (250) for shielding an operator from UV light when said UV light source (220) is activated.

20. The apparatus (20) according to claim 19, wherein:
said UV shield (250) is mounted to said transporter (26); and,
said UV shield (250) is connected to a safety sensor (252) which communicates with said transporter (26) to interrupt motion of said transporter (26) when said shield (250) encounters an obstruction.

21. The apparatus (20) according to claim 20, wherein said safety sensor (252) communicates with said controller (29) and said controller (29) causes said motion of said transporter (26) to be interrupted.

## Patentansprüche

1. Verfahren zum Blocken eines Linsenrohlings (60), der eine erste Fläche (61) und eine zweite Fläche entgegengesetzt zu der ersten Fläche (61) hat, wobei das Verfahren die folgenden Schritte aufweist:
(i) Beschaffen eines Linsenblocks (210), der aus einem transparenten Material besteht, das fähig ist, zumindest Licht des UV-Spektrums und auch des sichtbaren Lichtspektrums durchzulassen, wobei der Linsenblock (210) eine Linsenbefestigungsfläche (212) hat, die fähig ist, den Linsenrohling (60) über einen Großteil der ersten Fläche (61) des Linsenrohlings (60) abzustützen;
(ii) Aufbringen eines Klebstoffs, der durch sichtbares und/oder UV-Licht aushärtbar ist, auf mindestens eine der Flächen, die erste Fläche (61) des Linsenrohlings (60) und die Linsenbefestigungsfläche (212) des Linsenblocks (210);
(iii) Drücken des Linsenrohlings (60) in Richtung auf den Linsenblock (210), wobei die erste Fläche (61) des Linsenrohlings (60) der Linsenbefestigungsfläche (212) des Linsenblocks (210) zugewandt ist und die zweite Fläche des Linsenrohlings (60) von der Linsenbefestigungsfläche (212) des Linsenblocks (210) abgewandt ist, so dass der Klebstoff auf einen Großteil der ersten Fläche (61) des Linsenrohlings (60) aufgebracht wird;
(iv) Erzeugen von UV-Licht und sichtbarem Licht und Durchlassen des Lichts durch den Linsenblock (210) zu dem Klebstoff, wobei das Licht eine Wellenlänge und eine Intensität hat und für eine Zeitspanne eingesetzt wird, die für ein Aushärten des Klebstoffs ausreichend ist, wodurch der Linsenrohling (60) auf dem Linsenblock (210) aufgeklebt wird;
(v) wobei der Klebstoff derart gewählt ist, dass er eine derart geringe Maßveränderung beim Aushärten hat, dass er in weniger als 30 Sekunden aushärten kann, ohne unzulässige Belastungen auf den Linsenrohling (60) auszuüben, und fähig ist, bei Aufbringung einer ausreichenden Abziehkraft, die zwischen dem Linsenrohling (60) und dem Linsenblock (210) wirkt, die Klebeverbindung ohne Beschädigung der Linse oder des Linsenrohlings (60) oder das Verbleiben von Resten auf der Linse vollständig aufzuheben, so dass der Linsenrohling (60) unter Einsatz von lediglich mechanischen Trennmitteln von dem Linsenblock (210) entfernbar ist.

2. Verfahren nach Anspruch 1, wobei:
der Linsenblock (210) während der Schritte (ii), (iii) und (iv) mit der Linsenbefestigungsfläche (212) im Wesentlichen horizontal ausgerichtet wird; und
der Linsenrohling (60) während der Schritte (iii) und (iv) in einer vorbestimmten Ausrichtung relativ zu dem Linsenblock (210) gehalten wird.

3. Verfahren nach Anspruch 2, wobei:
die Kontur der ersten Fläche (61) des Linsenrohlings (60) vor dem Schritt (iii) ermittelt wird; und
die erste Fläche (61) des Linsenrohlings (60) während des Schritts (iv) in einem vorbestimmten Abstand zu der Linsenbefestigungsfläche (212) des Linsenblocks (210) gehalten wird.

4. Verfahren nach Anspruch 1, das ferner vor dem Schritt (i) die folgenden Schritte aufweist:
Legen des Linsenrohlings (60) auf eine Linsenausrichtstation (30);
Bestimmen der Linsenausrichtungs- und Lageparameter;
Transportieren des Linsenrohlings (60) zu einer Vermessungsstation (32), während die Ausrichtung aus dem vorhergehenden Schritt beibehalten wird; und
Erfassen einer Kontur der ersten Fläche (61) des Linsenrohlings (60), während die Ausrichtung beibehalten wird, und Erzeugen und Speichern von Oberflächenkonturdaten.

5. Verfahren nach Anspruch 4, wobei der Schritt (iii) ferner die folgenden Unterschritte aufweist:
Transportieren des Linsenrohlings (60) zu einer Linsenblockstation (34) und Positionieren des Linsenrohlings (60) über der Linsenbefestigungsfläche (212) des Linsenblocks (210), der in die Linsenblockstation (34) eingesetzt ist,
wobei die erste Fläche (61) des Linsenrohlings (60) der Linsenbefestigungsfläche (212) des Linsenblocks (210) unter Beibehaltung der Ausrichtung zugewandt ist; und Bewegen des Linsenrohlings (60) in Richtung auf den Linsenbefestigungsflächen-Klebstoff bis die erste Fläche (61) des Linsenrohlings (60) sich in einem vorbestimmten Abstand zu der Linsenbefestigungsfläche (212) befindet und sich der Klebstoff zwischen der Linsenbefestigungsfläche (212) und der ersten Fläche (61) des Linsenrohlings (60) ausbreitet.

6. Verfahren nach Anspruch 4 und 5, das ferner nach dem Schritt (iv) die folgenden Schritte aufweist:
Referenzieren der Oberflächenkonturdaten der ersten Fläche (61) zu einem dem Linsenblock (210) zugeordneten Bezugspunkt und Aufzeichnen der Referenzdaten; und
Entfernen des Linsenblocks (210) mit dem an diesem befestigten Linsenrohling (60) aus der Linsenblockstation (34).

7. Verfahren nach Anspruch 6, wobei der Linsenrohling (60) eine zweite Fläche entgegengesetzt zu der ersten Fläche (61) hat, und das die weiteren Schritte aufweist:
Bestimmen einer Position der zweiten Fläche; und
Referenzieren der Position der zweiten Fläche relativ zu dem Bezugspunkt an dem Linsenblock (210).

8. Verfahren nach Anspruch 6, wobei der Klebstoff derart gewählt ist, dass:
er von ausreichend hoher Viskosität ist, um ein Überlaufen während des Schritts (iv) und der Schritte nach Anspruch 6 zu vermeiden;
er nach dem Aushärten Halt gibt, um einer Linsendurchbiegung während der Linsenherstellung zu widerstehen; und
er Schwingungen absorbiert, die während der Linsenherstellung durch ein Linsenoberflächenbearbeitungswerkzeug auf die Linse übertragen werden.

9. Verfahren nach Anspruch 8, wobei der Klebstoff ferner derart gewählt ist, dass er sich unter Wärme, die mit einem Aushärten beim Linsenbeschichten verbunden ist, nicht verformt.

10. Verfahren nach Anspruch 4, wobei der Schritt des Bestimmens der Linsenausrichtungs- und Lageparameter die folgenden Unterschritte aufweist:
(a) Erzeugen eines Bilds einer gewünschten Position und Ausrichtung des Linsenrohlings auf einem Bildschirm (38);
(b) Erzeugen eines Bilds auf dem Bildschirm (38), das die Ausrichtung des Linsenrohlings (60) auf der Linsenausrichtstation (30) darstellt; und
(c) Positionieren und Ausrichten des Linsenrohlings (60), um das Bild gemäß Unterschritt (b) mit dem Bild gemäß Unterschritt (a) in Übereinstimmung zu bringen.

11. Verfahren nach Anspruch 9, wobei der Schritt des Bestimmens der Linsenausrichtungs- und Lageparameter unter Nutzung einer Computerbilderkennung ausgeführt wird, um Ausrichtungs- und Lageparameter zu erzeugen, die gespeichert werden und einen Teil der Oberflächenkonturdaten der ersten Fläche nach Anspruch 4 bilden.

12. Vorrichtung (20) zum Blocken eines Brillenlinsenrohlings (60), der eine erste Fläche (61) und eine zweite Fläche entgegengesetzt zu der ersten Fläche (61) hat, unter Verwendung des Verfahrens nach einem der vorhergehenden Ansprüche, umfassend:
(A) eine Linsenrohling-Aufnahmestation (30) zur Aufnahme eines Linsenrohlings (60);
(B) eine Linsenblockstation (34), die eine Linsenblockhalterung (200)
zur Aufnahme eines Linsenblocks (210), der aus einem transparenten Material besteht, das fähig ist, Licht des UV-Spektrums und des sichtbaren Lichtspektrums durchzulassen, und eine Linsenbefestigungsfläche (212) hat, die fähig ist, den Linsenrohling (60) über einen Großteil der ersten Fläche (61) des Linsenrohlings (60) abzustützen, und
zum Halten des Linsenblocks (210) mit der Linsenbefestigungsfläche (212) des Linsenblocks (210) in einer gewünschten Ausrichtung,
wobei die Linsenblockhalterung (200) ebenfalls fähig ist, UV-Licht und sichtbares Licht durchzulassen;
(C) eine Linsentransporteinrichtung (26), die einen Linsenhalter (70) zum wahlweisen Aufnehmen und Halten des Linsenrohlings (60), Bewegen des Linsenrohlings (60) über die Linsenblockhalterung (200) und Bewegen des Linsenrohlings (60) in Richtung auf die Linsenblockhalterung (200) hat, so dass die erste Fläche (61) des Linsenrohlings (60) der Linsenbefestigungsfläche (212) des Linsenblocks (210) mit einem Spalt dazwischen zugewandt ist;
(D) eine Lichtquelle (220) zum Emittieren von UV-Licht und sichtbarem Licht, die der Linsenblockhalterung (200) derart zugeordnet ist, dass sie montiert ist, um Licht durch eine Öffnung (202) in der Linsenblockhalterung (200) zu richten, die das Licht wiederum durch den Linsenblock (210) leitet;
(E) eine Lichtquellen-Betätigungseinrichtung, die mit der Lichtquelle (220) verbunden ist, um das Ein- und Ausschalten der Lichtquelle (220) zu steuern;
(F) eine Klebstoffabgabeeinrichtung (230), die der Linsenblockstation (34) zugeordnet ist, um einen durch UV-Licht und sichtbares Licht aushärtbaren Klebstoff zum Aufkleben des Linsenrohlings (60) auf der Linsenbefestigungsfläche (212) des Linsenblocks (210) abzugeben;
(G) eine Betätigungseinrichtung für die Abgabeeinrichtung (230), die mit der Abgabeeinrichtung (230) verbunden ist, um zu bewirken, dass die Abgabeeinrichtung (230) eine abgemessene Menge des Klebstoffs abgibt, die den Spalt zwischen der ersten Fläche (61) des Linsenrohlings (60) und der Linsenbefestigungsfläche (212) des Linsenblocks (210) im Wesentlichen füllt; und
(H) eine Steuereinrichtung (29), die mit der Transporteinrichtung (26), der Betätigungseinrichtung für die Abgabeeinrichtung und der Lichtquellen-Betätigungseinrichtung kommuniziert, um deren Betrieb zu steuern.

13. Vorrichtung (20) nach Anspruch 12, wobei:
die Abgabeeinrichtung (230) eine Abgabedüse (232) und eine Düsenverschiebeeinrichtung (236) umfasst, die mit der Düse verbunden ist, um die Düse (232) zwischen einer Einsatzposition nahe der Linsenbefestigungsfläche (212) des Linsenblocks (210), der auf der Linsenblockhalterung (200) gehalten ist, und einer eingezogenen Position fernab des Linsenrohlings (60) und der Transporteinrichtung (26) zu bewegen; und
die Steuereinrichtung (29) ferner mit der Düsenverschiebeeinrichtung (236) kommuniziert, um den Einsatz und das Einfahren der Düse (232) zu steuern.

14. Vorrichtung (20) nach Anspruch 13, wobei die Linsenrohling-Aufnahmestation (30) umfasst:
eine Linsenausrichtungsanzeige, die eine erste Bilderzeugungseinrichtung zur Erzeugung eines Bilds der gewünschten Linsenausrichtung und eine zweite Bilderzeugungseinrichtung zur Erzeugung eines zweiten Bilds hat, das die tatsächliche Ausrichtung des Linsenrohlings (60) angibt; und
eine Bildvergleichseinrichtung (38), die mit der ersten und der zweiten Bilderzeugungseinrichtung kommuniziert, um das erste Bild im Verhältnis zum zweiten Bild anzuzeigen, um die Behandlung des Linsenrohlings (60) zu lenken, um zu bewirken, dass die tatsächliche Ausrichtung der gewünschten Ausrichtung entspricht.

15. Vorrichtung (20) nach Anspruch 14, wobei:
die Vorrichtung (20) ferner eine Vermessungsstation (32) aufweist, auf welcher der Linsenrohling (60) mittels der Linsentransporteinrichtung (26) platziert werden kann, wobei die Vermessungsstation (32) eine Mehrzahl von Linsenvermessungselementen (130) zum Erfassen der Kontur einer ersten Fläche (61) des Linsenrohlings (60) umfasst, um eine erste Flächenkontur zu bestimmen;
die Steuereinrichtung (29) mit der Vermessungsstation (32) kommuniziert, um Informationen zur Kontur der ersten Fläche (61) relativ zu einem ersten Bezugspunkt zu erhalten;
die Transporteinrichtung (26) derart konfiguriert ist, dass der Linsenrohling (60) zwischen der Vermessungsstation (32) und der Blockstation (34) bewegt wird, während der Linsenrohling (60) in der gewünschten Ausrichtung gehalten wird;
die Steuereinrichtung (29) konfiguriert ist, um zu bewirken, dass die Transporteinrichtung (26) den Linsenrohling (60) nahe dem Linsenblock (210) mit der ersten Fläche (61) in einem vorbestimmten feststehenden Abstand zur Linsenbefestigungsfläche (212) platziert und den feststehenden Abstand während des Aushärtens des Klebstoffs beibehält; und
die Steuereinrichtung (29) die Informationen zur ersten Flächenkontur zu einem zweiten Bezugspunkt umrechnet, der dem Linsenblock (210) zugeordnet ist, und die Informationen relativ zum zweiten Bezugspunkt speichert.

16. Vorrichtung (20) nach Anspruch 15, wobei die Linsentransporteinrichtung (26) eine Lagemesseinrichtung (102) für die zweite Fläche zur Bestimmung der Lage der zweiten Fläche relativ zu der ersten Fläche (61) umfasst und die Lage der zweiten Fläche zu der Steuereinrichtung (29) überträgt.

17. Vorrichtung (20) nach Anspruch 15, wobei:
die Abgabedüse (232) an einem Abgabearm (234) befestigt ist, der beweglich an einem Abgabekörper befestigt ist;
die Abgabeeinrichtung (230) eine Armbetätigungseinrichtung (236) umfasst, die mit der Steuereinrichtung (29) kommuniziert, um den Abgabearm (234) relativ zu dem Abgabekörper zwischen der Einsatzposition und der eingezogenen Position zu bewegen;
die Düse (232) in Fluidverbindung mit einer Quelle (23) für UV-aushärtenden Klebstoff steht, die eine Druckeinrichtung für die Zufuhr des UV-aushärtenden Klebstoffs zu der Düse (232) hat; und
die Steuereinrichtung (29) mit einem der Düse (232) zugeordneten Ausschaltmechanismus kommuniziert, um die Abgabe des Klebstoffs durch die Düse (232) zu steuern.

18. Vorrichtung (20) nach Anspruch 16, wobei:
die Abgabedüse (232) an einem Abgabearm (234) befestigt ist, der beweglich an einem Abgabekörper befestigt ist;
die Abgabeeinrichtung (230) eine Armbetätigungseinrichtung (236) umfasst, die mit der Steuereinrichtung (29) kommuniziert, um den Abgabearm (234) relativ zu dem Abgabekörper zwischen der Einsatzposition und der eingezogenen Position zu bewegen;
die Düse (232) mit einer Quelle (23) für UV-aushärtenden Klebstoff über eine Pumpe (25) in Fluidverbindung steht, zum Zuführen des Klebstoffs zu der Düse (232); und
die Steuereinrichtung (29) mit einem der Düse (232) zugeordneten Ausschaltmechanismus kommuniziert, um die Abgabe des Klebstoffs durch die Düse (232) zu steuern.

19. Vorrichtung (20) nach Anspruch 18, wobei die Vorrichtung (20) ein UV-Schutzschild (250) zum Abschirmen eines Bedieners von dem UV-Licht hat, wenn die UV-Lichtquelle (220) aktiviert ist.

20. Vorrichtung (20) nach Anspruch 19, wobei:
der UV-Schutzschild (250) an der Transporteinrichtung (26) befestigt ist; und
der UV-Schutzschild (250) mit einem Sicherheitssensor (252) verbunden ist, der mit der Transporteinrichtung (26) kommuniziert, um eine Bewegung der Transporteinrichtung (26) zu unterbrechen, wenn der Schutzschild (250) auf ein Hindernis stößt.

21. Vorrichtung (20) nach Anspruch 20, wobei der Sicherheitssensor (252) mit der Steuereinrichtung (29) kommuniziert und es die Steuereinrichtung (29) veranlasst, dass die Bewegung der Transporteinrichtung (26) unterbrochen wird.

## Revendications

1. Procédé de blocage d'une ébauche de verre (60) qui a une première face (61) et une seconde face, opposée à ladite première face (61), le procédé comprenant les étapes consistant à :
(i) obtenir un bloc de support de verre (210) qui est composé d'un matériau transparent pouvant transmettre au moins de la lumière dans le spectre UV et aussi dans le spectre visible, ledit bloc de support de verre (210) ayant une face de montage de verre (212) pouvant supporter ladite ébauche de verre (60) sur une majorité de ladite première face (61) de ladite ébauche de verre (60) ;
(ii) appliquer un adhésif durcissable par au moins l'une de la lumière UV et de la lumière visible à au moins l'une de ladite première face (61) de ladite ébauche de verre (60) et de ladite face de montage de verre (212) dudit bloc de support de verre (210) ;
(iii) pousser ladite ébauche de verre (60) vers ledit bloc de support de verre (210) avec ladite première face (61) de ladite ébauche de verre (60) dirigée vers ladite face de montage de verre (212) dudit bloc de support de verre (210), ladite seconde face de ladite ébauche de verre (60) étant dirigée s'éloignant de ladite face de montage de verre (212) dudit bloc de support de verre (210), de telle manière que ledit adhésif est appliqué sur une majorité de ladite première face (61) de ladite ébauche de verre (60) ;
(iv) générer une lumière UV et visible et émettre la lumière vers ledit adhésif à travers ledit bloc de support de verre (210), ladite lumière étant d'un longueur d'onde et d'une intensité et appliquée pendant un intervalle de temps suffisants pour causer le durcissement dudit adhésif collant ainsi ladite ébauche de verre (60) sur ledit bloc de support de verre (210) ;
(V) ledit adhésif étant sélectionné pour avoir un changement dimensionnel lors du durcissement suffisamment faible pour pouvoir durcir en moins de 30 secondes sans imprimer des contraintes inacceptables à ladite ébauche de verre (60) et pouvant casser sans endommager le verre ou l'ébauche de verre (60) ou laisser des résidus sur le verre lors de l'application d'une force de décrochage suffisante agissant entre ladite ébauche de verre (60) et ledit bloc de support de verre (210) de telle manière que ladite ébauche de verre (60) peut être enlevée dudit bloc de support de verre (210) en utilisant seulement des moyens de séparation mécaniques.

2. Procédé selon la revendication 1, dans lequel :
ledit bloc de support de verre (210) est orienté avec ladite face de montage de verre (212) sensiblement horizontale pendant les étapes (ii), (iii) et (iv) ; et
ladite ébauche de verre (60) est maintenue en une orientation prédéterminée par rapport au dit bloc de support de verre (210) pendant les étapes (iii) et (iv).

3. Procédé selon la revendication 2, dans lequel :
le contour de ladite première face (61) de ladite ébauche de verre (60) est déterminée avant l'étape (iii) ; et,
ladite première face (61) de ladite ébauche de verre (60) est maintenue à une distance d'espacement prédéterminée de ladite face de montage de verre (212) dudit bloc de support de verre (210) pendant l'étape (iv).

4. Procédé selon la revendication 1, comprenant en outre les étapes suivantes avant l'étape (i) :
placer ladite ébauche de verre (60) sur un poste d'orientation de verre (30) ;
déterminer les paramètres d'orientation et de position de verre ;
transporter ladite ébauche de verre (60) vers un poste de vérification (32) tout en maintenant ladite orientation depuis l'étape précédente ; et,
mesurer un contour de première face (61) de ladite ébauche de verre (60) tout en maintenant ladite orientation et générer et stocker des données de contour de surface.

5. Procédé selon la revendication 4, dans lequel l'étape (iii) comprend en outre les sous-étapes suivantes :
transporter ladite ébauche de verre (60) vers un poste de blocage de verre (34) et positionner ladite ébauche de verre (60) au-dessus de ladite face de montage de verre (212) dudit bloc de support de verre (210) installé dans ledit poste de blocage de verre (34) avec ladite première face (61) de ladite ébauche de verre (60) dirigée vers ladite face de montage de verre (212) dudit bloc de support de verre (210) tout en maintenant ladite orientation ; et,
déplacer ladite ébauche de verre (60) vers ledit adhésif de la face de montage de verre adhésive jusqu'à ce que ladite première face (61) de ladite ébauche de verre (60) soit à une distance prédéterminée de ladite face de montage de verre (212) et que ledit adhésif s'étende entre ladite face de montage de verre (212) et ladite première face (61) de ladite ébauche de verre (60).

6. Procédé selon les revendications 4 et 5, comprenant en outre les étapes suivantes après l'étape (iv) :
référencer lesdites données de contour de surface de première face (61) associées au dit bloc de support de verre (210) et enregistrer les données référencées ; et
enlever ledit bloc de support de verre (210) avec ladite ébauche de verre (60) fixée dessus dudit poste de blocage de verre (34).

7. Procédé selon la revendication 6, dans lequel ladite ébauche de verre (60) a une seconde face opposée à ladite première face (61) et incluant en outre les étapes consistant à :
déterminer une position de ladite seconde face ; et,
référencer ladite position de ladite seconde face par rapport à ladite donnée sur ledit bloc de support de verre (210).

8. Procédé selon la revendication 6, dans lequel ledit adhésif est sélectionné pour :
être d'une viscosité suffisamment élevée pour éviter le débordement pendant l'étape (iv) et les étapes de la revendication 6 ;
une fois durci fournir un support pour résister à la déviation du verre pendant la génération du verre ; et
absorber les vibrations imprimées au dit verre par un outil de surfaçage de verre pendant ladite génération du verre.

9. Procédé selon la revendication 8, dans lequel ledit adhésif est en outre sélectionné pour ne pas se déformer sous la chaleur associée au durcissement du revêtement de verre.

10. Procédé selon la revendication 4, dans lequel l'étape consistant à déterminer les paramètres d'orientation et de position de verre comprend les sous-étapes suivantes :
(a) générer une image d'orientation et de position d'ébauche de verre souhaitées sur un écran (38) ;
(b) générer une image sur ledit écran (38) représentant l'orientation de ladite ébauche de verre (60) sur ledit poste d'orientation de verre (30) ; et,
(c) positionner et orienter ladite ébauche de verre (60) pour faire que l'image lors de la sous-étape (b) corresponde à l'image lors de la sous-étape (a).

11. Procédé selon la revendication 9, dans lequel l'étape consistant à déterminer les paramètres d'orientation et de position de verre est réalisée en utilisant une reconnaissance informatique d'image pour générer des paramètres d'orientation et de position de verre qui sont stockés et forment partie desdites données de contour de surface de première face selon la revendication 4.

12. Dispositif (20) pour bloquer une ébauche de verre (60) ophtalmique qui a une première face (61) et une seconde face, opposée à ladite première face (61), utilisant le procédé selon l'une quelconque des revendications précédentes, comprenant :
(A) un poste de réception d'ébauche de verre (30) pour recevoir ladite ébauche de verre (60) ;
(B) un poste de blocage de verre (34) comportant un support de bloc de support de verre (200)
pour recevoir un bloc de support de verre (210) qui est composé d'un matériau transparent pouvant transmettre de la lumière UV et visible et a une face de montage de verre (212) pouvant supporte ladite ébauche de verre (60) sur une majorité de ladite première face (61) de ladite ébauche de verre (60), et
pour supporter ledit bloc de support de verre (210) avec ladite face de montage de verre (212) dudit bloc de support de verre (210) dans une orientation souhaitée,
ledit support de bloc de support de verre (200) pouvant transmettre autant une lumière UV que visible ;
(C) un transporteur de verre (26) ayant un élément de saisie de verre (70) pour prendre sélectivement et porter ladite ébauche de verre (60), déplacer ladite ébauche de verre (60) sur ledit support de bloc de support de verre (200) et déplacer ladite ébauche de verre (60) vers ledit support de bloc de support de verre (200) de telle manière que ladite première face (61) de ladite ébauche de verre (60) est dirigée vers ladite face de montage de verre (212) dudit bloc de support de verre (210) avec un espace entre elles ;
(D) une source lumineuse (220) pour émettre la lumière UV et visible associée au dit support de bloc de support de verre (200) en ce qu'il est monté de façon à diriger la lumière à travers une ouverture (202) dans ledit support de bloc de support de verre (200) qui a son tour dirige ladite lumière à travers ledit bloc de support de verre (210) ;
(E) un actionneur de source lumineuse connecté à ladite source lumineuse (220) pour commander l'activation et la désactivation de ladite source lumineuse (220) ;
(F) un distributeur d'adhésif (230) associé au dit poste de blocage de verre (34) pour distribuer un adhésif durcissable par lumière UV et visible pour coller ladite ébauche de verre (60) sur ladite face de montage de verre (212) dudit bloc de support de verre (210) ;
(G) un actionneur de distributeur connecté au dit distributeur (230) pour faire que ledit distributeur (230) distribue une quantité mesurée d'adhésif qui remplisse sensiblement ledit espace entre ladite première face (61) de ladite ébauche de verre (60) et ladite face de montage de verre (212) dudit bloc de support de verre (210) ; et
(H) une commande (29) communiquant avec ledit transporteur (26), ledit actionneur de distributeur et ledit actionneur de source lumineuse pour commandeur leur fonctionnement.

13. Dispositif (20) selon la revendication 12, dans lequel ledit distributeur (230) inclut une buse de distributeur (232) et un manipulateur de buse (236) qui y est connecté pour déplacer ladite buse (232) entre une position déployée proche de ladite face de montage de verre (212) dudit bloc de support de verre (210) supporté sur ledit support de bloc de support de verre (200) et une position rétractée à distance de ladite ébauche de verre (60) et dudit transporteur (26) ; et
ladite commande (29) communique en outre avec ledit manipulateur de buse (236) pour commander le déploiement et la rétractation de ladite buse (232).

14. Dispositif (20) selon la revendication 13, dans lequel ledit poste de réception d'ébauche de verre (30) inclut :
un indicateur d'orientation de verre ayant un premier générateur d'image pour générer une image d'orientation de verre souhaitée et un second générateur d'image pour générer une seconde image indiquant l'orientation réelle de ladite ébauche de verre (60) ; et
un comparateur d'image (38) communiquant avec lesdits premier et second générateurs d'image pour afficher ladite première image par rapport à ladite seconde image pour guider la manipulation de ladite ébauche de verre (60) pour faire que ladite orientation réelle corresponde à ladite orientation souhaitée.

15. Dispositif (20) selon la revendication 14, dans lequel :
ledit dispositif (20) inclut en outre un poste de vérification (32) sur lequel ladite ébauche de verre (60) peut être placée par ledit transporteur de verre (26), ledit poste de vérification (32) incluant une pluralité d'éléments de vérification de verre (130) pour mesurer le contour d'une première face (61) de ladite ébauche de verre (60) pour déterminer un premier contour de face ;
ladite commande (29) communique avec ledit poste de vérification (32) pour recevoir une information sur le contour de ladite première face (61) par rapport à une première donnée ;
ledit transporteur (26) est configuré pour déplacer ladite ébauche de verre (60) entre ledit poste de vérification (32) et ledit poste de blocage (34) tout en maintenant ladite ébauche de verre (60) dans ladite orientation souhaitée ;
ladite commande (29) est configurée pour faire que le transporteur (26) place ladite ébauche de verre (60) proche dudit bloc de support de verre (210) avec ladite première face (61) à une distance fixe prédéterminée éloignée de ladite face de montage de verre (212) et maintienne ladite distance fixe pendant le durcissement dudit adhésif ; et
ladite commande (29) traduit ladite information de contour de première face en une seconde donnée associée au dit bloc de support de verre (210) et stocke ladite information concernant ladite seconde donnée.

16. Dispositif (20) selon la revendication 15, dans lequel ledit transporteur de verre (26) inclut une vérification de position de seconde face (102) pour déterminer la position de ladite seconde face par rapport à ladite première face (61) et transmet ladite position de seconde face à ladite commande (29).

17. Dispositif (20) selon la revendication 15, dans lequel :
ladite buse de distributeur (232) est montée sur un bras de distributeur (234) monté de manière mobile sur un corps de distributeur ;
ledit distributeur (230) inclut un actionneur de bras (236) communiquant avec ladite commande (29) pour déplacer ledit bras de distributeur (234) par rapport au dit corps de distributeur entre lesdites positions déployées et rétractées ;
ladite buse (232) communique fluidiquement avec une source d'adhésif durcissable par UV (23) ayant des moyens de pressurisation pour alimenter ledit adhésif durcissable par UV vers ladite buse (232) ; et,
ladite commande (29) communique avec un mécanisme de fermeture associé à ladite buse (232) pour commander la distribution dudit adhésif à travers ladite buse (232).

18. Dispositif (20) selon la revendication 16, dans lequel :
ladite buse de distributeur (232) est montée sur un bras de distributeur (234) monté de manière mobile sur un corps de distributeur ;
ledit distributeur (230) inclut un actionneur de bras (236) communiquant avec ladite commande (29) pour déplacer ledit bras de distributeur (234) par rapport au dit corps de distributeur entre lesdites positions déployée et contractée ;
ladite buse (232) communique fluidiquement avec une source d'adhésif durcissable par UV (23) à travers une pompe (25) pour alimenter ledit adhésif vers ladite buse (232) ; et,
ladite commande (29) communique avec un mécanisme de fermeture associé à ladite buse (232) pour commander la distribution dudit adhésif à travers ladite buse (232).

19. Dispositif (20) selon la revendication 18, dans lequel ledit dispositif (20) inclut un bouclier anti-UV (250) pour protéger un opérateur de la lumière UV quand ladite source de lumière UV (220) est activée.

20. Dispositif (20) selon la revendication 19, dans lequel :
ledit bouclier anti-UV (250) est monté sur ledit transporteur (26) ; et
ledit bouclier anti-UV (250) est connecté à un capteur de sécurité (252) qui communique avec ledit transporteur (26) pour interrompre le mouvement dudit transporteur (26) quand ledit bouclier (250) rencontre une obstruction.

21. Dispositif (20) selon la revendication 20, dans lequel ledit capteur de sécurité (252) communique avec ladite commande (29) et ladite commande (29) provoque l'interruption dudit mouvement dudit transporteur (26).
